(19) **Europäisches Patentamt European Patent Office Office européen des brevets**

(11) **EP 3 148 323 B1**

(12) **FASCICULE DE BREVET EUROPEEN**

(45) Date de publication et mention de la délivrance du brevet:
**14.08.2019 Bulletin 2019/33**

(21) Numéro de dépôt: **15733786.6**

(22) Date de dépôt: **02.06.2015**

(51) Int Cl.:
*A01K 1/015* ^(2006.01)    *A01K 1/035* ^(2006.01)

(86) Numéro de dépôt international:
**PCT/FR2015/051445**

(87) Numéro de publication internationale:
**WO 2015/185843 (10.12.2015 Gazette 2015/49)**

(54) **SYSTÈME POUR LE SUIVI D'ANIMAUX DANS UNE ENCEINTE D'ÉLEVAGE COMPRENANT AU MOINS UN MATELAS DE CONFORT**

**SYSTEM ZUR ÜBERWACHUNG VON TIEREN IN EINEM AUFZUCHTGEHÄUSE MIT MINDESTENS EINER KOMFORT-MATRATZE**

**SYSTEM FOR MONITORING ANIMALS IN A LIVESTOCK BUILDING COMPRISING AT LEAST A COMFORT MATTRESS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2014   FR 1454976**
**28.08.2014   FR 1458052**
**03.10.2014   FR 1459506**

(43) Date de publication de la demande:
**05.04.2017   Bulletin 2017/14**

(73) Titulaire: **Bioret Agri-Logette Confort**
**44390 Nort sur Erdre (FR)**

(72) Inventeur: **BIORET, Jean-Vincent**
**44390 Petit Mars (FR)**

(74) Mandataire: **Jacobacci Coralis Harle**
**32, rue de l'Arcade**
**75008 Paris (FR)**

(56) Documents cités:
**EP-A2- 2 027 815      WO-A1-99/03332**
**US-A- 5 003 923       US-A- 5 176 424**
**US-A- 5 948 303       US-A1- 2007 204 857**
**US-A1- 2008 173 627   US-A1- 2012 299 731**

**Description**

DOMAINE TECHNIQUE AUQUEL SE RAPPORTE L'INVENTION

La présente invention concerne un matelas de confort pour animaux, par exemple pour les bovins laitiers et les bovins à viande, en particulier pour l'aménagement de logettes dans une enceinte d'élevage.

Un matelas de confort pour animaux domestiques est par exemple divulgué dans le document US 2008/0173627 A1.

ARRIERE-PLAN TECHNOLOGIQUE

Le confort des animaux constitue un paramètre déterminant dans le rendement d'un élevage.

Ce confort influence notamment la santé, la façon de s'alimenter, la prise alimentaire, la fertilité et la longévité des animaux.

De manière courante, en étable, les bovins se reposent individuellement dans des logettes, encore couramment appelées « free stall », dans lesquelles les bovins sont libres de se lever et de se coucher.

Cependant, lorsqu'ils effectuent ces mouvements, les animaux sont susceptibles de se blesser. C'est en particulier le cas lorsque la litière est constituée de paille recouvrant du béton, qui ne protège pas l'animal de la glissade.

Pour limiter (voire supprimer) ce type d'incident et les blessures qui en découlent, il est connu d'équiper le sol de ces logettes avec des matelas de confort.

Ces matelas de confort comprennent, classiquement, au moins une couche résiliente qui est apte à subir une déformation élastique, sous-jacente d'une surface supérieure sur laquelle un animal prend appui.

Par ailleurs, l'éleveur a besoin d'indicateurs ou d'informations qui lui permettent un suivi objectif du bien être et des modifications physiologiques des animaux, au sein de ces logettes.

Par exemple, en cas de fortes chaleurs, les animaux sont susceptibles de subir un phénomène néfaste dit de « stress thermique ».

Un tel stress thermique se traduit notamment par des manifestations comportementales de défense, une chute des performances zootechniques, une détérioration des paramètres de la reproduction et une augmentation des pathologies.

Pour évaluer le risque de survenance d'un tel stress thermique, il est courant de calculer un paramètre indirect désigné « index température-humidité de l'air » ou « ITH ».

Ce paramètre est calculé selon la formule suivante :

$$ITH = 0,8\ Ta + HR\ (Ta - 14,4) + 46,4$$

dans laquelle

Ta = température de l'air en °C , et
HR = humidité relative de l'air.

La valeur de cet ITH permet d'évaluer l'efficacité de la méthode « évaporatoire » chez les animaux, à savoir une polypnée permettant au sujet d'éliminer les calories et la vapeur d'eau par le biais de la respiration.

Toutefois, un tel index a l'inconvénient de correspondre à une mesure indirecte du stress thermique, avec un seuil critique qui n'est pas strictement établi (variant entre 65 et 75 selon les études).
De plus, cet index ne tient pas compte des effets d'aération (vent, courant d'air, etc.) ou de radiation de l'environnement (nature des surfaces exposées au soleil).

La température corporelle des animaux constitue un autre paramètre intéressant pour évaluer l'intensité du stress thermique subi par un animal.

Cette approche a l'intérêt de mesurer directement, sur l'animal, son état de stress thermique.

Ainsi les vaches qui connaissent des températures rectales supérieures à 39°C sont à risque, avec une incidence potentielle sur la production laitière et la fertilité.

Mais, les méthodes actuelles ne permettent pas d'envisager une telle approche directe, notamment au regard du temps pour obtenir des données et des contraintes inhérentes. Cette approche directe ne permet pas non plus un suivi constant de la température des animaux.

Dans ce contexte, il existe un besoin pour détecter, objectivement et précisément, les modifications physiologiques des animaux liées à leur état de santé et/ou à l'environnement, de sorte, si nécessaire, à mettre en oeuvre rapidement, des dispositions et/ou interventions adaptées.

Plus généralement, même si de tels matelas améliorent incontestablement le confort de couchage, l'éleveur a besoin d'indicateurs qui lui permettent un suivi objectif du bien être des animaux, individuellement et/ou par lot, au sein de ces logettes.

OBJET DE L'INVENTION

Dans ce contexte, la demanderesse a développé une nouvelle structure de matelas de confort pour une enceinte d'élevage, par exemple pour bovins laitiers ou pour bovins à viande, comportant :

- au moins une couche résiliente apte à subir une déformation élastique, et
- une surface supérieure (sus-jacente de ladite couche résiliente) sur laquelle un animal est destiné à prendre appui.

Et conformément à l'invention, ce matelas de confort est équipé de moyens pour déterminer au moins un paramètre (avantageusement un paramètre physiologique) d'un animal en appui sur ladite surface supérieure, destinés à être raccordés à des moyens déportés de collecte/traitement des données, lesquels moyens de détermination comprennent des moyens de détection comprenant au moins un capteur de pression, pour la mesure du poids dudit au moins un animal en appui sur ladite surface supérieure.

Un tel matelas de confort est particulièrement intéressant pour un éleveur souhaitant disposer d'indicateurs qui lui permettent un suivi objectif du bien être des animaux, individuellement et/ou par lot, au sein de l'enceinte d'élevage.

En particulier, un tel matelas est intéressant pour détecter et analyser l'ambiance du bâtiment tenant compte des logettes fréquentées.

Il permet également de vérifier que les phases de repos se déroulent convenablement.

Pour les bovins à viande, ce matelas peut ainsi également permettre de détecter et d'analyser la prise de poids des animaux.

Dans le cas d'une surface supérieure constituée par un revêtement rapporté sur la couche résiliente, le capteur de pression est de préférence implanté entre ladite couche résiliente et ledit revêtement.

Alors la couche résiliente est avantageusement constituée par des granules de caoutchouc, agglomérés ou non agglomérés.

Dans le cas d'une couche résiliente constituée par au moins une poche étanche destinée à être remplie par un fluide, le capteur de pression est avantageusement implanté - au sein de la poche étanche, ou - à l'extérieur de la poche étanche, raccordés ensemble par le biais de moyens de communication fluidique.

Selon l'invention, le matelas comporte plusieurs modules d'accueil juxtaposés qui sont chacun aptes à accueillir au moins un animal et qui sont chacun équipés desdits moyens de détermination.

Dans ce cas, les moyens de détection comprennent selon l'invention au moins un capteur de pression qui est positionné au niveau de chacun des modules d'accueil.

Ce matelas de confort est encore avantageusement équipé de moyens pour mesurer la température corporelle d'un animal en appui sur ladite surface supérieure.

Un tel matelas de confort est particulièrement intéressant pour un éleveur souhaitant disposer d'indicateurs qui lui permettent un suivi objectif, direct et constant du bien être des animaux ou de modifications physiologiques de ces animaux (individuellement et/ou par lot) au sein de l'enceinte d'élevage.

En particulier, un tel matelas est intéressant pour détecter directement l'état de stress thermique chez les animaux, notamment lors d'une élévation de la température d'un animal au-delà d'un seuil déterminé (par exemple 39°C).

Un tel matelas peut également servir à détecter d'autres troubles physiologiques chez les animaux, par exemple une mammite aiguë (plus de 39°C) voire suraiguë (plus de 41 °C), un état grippal (du par exemple au virus PI3 ou virus parainfluenza III), etc.

Les moyens de mesure de température corporelle comprennent avantageusement au moins un capteur de température qui est destiné à être raccordé aux moyens déportés de collecte/traitement des données.

Selon un mode de réalisation particulier, la surface supérieure du matelas est avantageusement constituée par un revêtement rapporté sur la couche résiliente, et le capteur de température est implanté entre ladite couche résiliente et ledit revêtement.

Dans ce cas, la couche résiliente est constituée avantageusement par des granules de caoutchouc agglomérés ou non agglomérés.

Selon un autre mode de réalisation, la couche résiliente est constituée par au moins une poche étanche destinée à être remplie avec un fluide.

Dans ce cas, la poche étanche est avantageusement délimitée par un panneau supérieur et par un panneau inférieur, et le capteur de température est implanté au niveau dudit panneau supérieur.

Avantageusement, ledit au moins un capteur de température est implanté sur une ligne médiane longitudinale et sur une moitié avant dudit matelas de confort.

Selon d'autres caractéristiques de réalisation intéressantes :

- le matelas est encore équipé de moyens pour la détection de vibrations s'exerçant sur la surface supérieure, pour la détection de la fréquence respiratoire et/ou du rythme cardiaque d'un animal en appui sur ladite surface supérieure ;
- le matelas comporte plusieurs modules d'accueil juxtaposés qui sont chacun aptes à accueillir au moins un animal et qui sont chacun équipés desdits moyens de mesure de température, et le cas échéant desdits moyens de détection de vibration, de sorte à déterminer la température, et le cas échéant la fréquence respiratoire et/ou cardiaque, sur la surface supérieure de chacun desdits modules d'accueil ; les moyens de mesure de température, et le cas échéant les moyens de détection de vibration, comprennent avantageusement au moins un capteur qui est positionné au niveau de chacun des modules d'accueil.

La présente invention selon la revendication 1 concerne un système pour le suivi d'animaux, par exemple pour bovins laitiers ou pour bovins à viande, dans une enceinte d'élevage, comprenant :

- au moins un matelas de confort défini ci-dessus, et
- des moyens déportés de collecte et/ou de traitement des données, raccordés aux moyens de détermination équipant ledit ou lesdits matelas de confort.

Les moyens de collecte et/ou de traitement de données comportent :

- selon l'invention des moyens de mesure du poids du ou des animaux en appui sur le ou les matelas de confort, voire des moyens de suivi de la prise de poids dudit ou desdits animaux, et de préférence
- des moyens d'analyse du temps passé par phase de repos sur le ou les matelas de confort,
- des moyens d'analyse de la fréquence d'utilisation du ou des matelas de confort,
- des moyens d'analyse globale de la fréquentation de l'enceinte d'élevage.

De préférence, les moyens de détection sont raccordés aux moyens de collecte/traitement par le biais de moyens filaires agencés le long d'une bordure avant du matelas de repos.

Toujours de préférence, le système de suivi comprend des moyens pour la reconnaissance individualisée de l'animal en appui sur le ou les matelas de confort, et le cas échéant sur chacun de leurs modules d'accueil.

La présente invention concerne encore une enceinte d'élevage équipée d'un système de suivi défini ci-dessus, et éventuellement des moyens pour la régulation de ces conditions aériennes (température et humidité).

De préférence, l'enceinte d'élevage comprend des logettes, et ledit au moins un matelas de confort recouvre le sol de chacune des logettes.

DESCRIPTION DETAILLEE DE L'INVENTION

L'invention sera encore illustrée, sans être aucunement limitée, par la description suivante de modes de réalisation particuliers en relation avec les figures annexées dans lesquelles :

- la figure 1 est une vue schématique de dessus d'une partie de l'intérieur d'une enceinte d'élevage, à savoir d'une ligne de logettes qui est équipée d'un système de suivi comprenant des matelas de confort dont la couche résiliente est constituée par des granules de caoutchouc ;
- la figure 2 est une vue schématique, selon un plan de coupe vertical, du matelas de confort selon la figure 1 ;
- la figure 3 est une vue schématique de dessus d'une ligne de logettes d'une enceinte d'élevage, équipée ici d'un système de suivi comprenant des matelas de confort dont la couche résiliente est constituée par une poche étanche remplie par un fluide (par exemple de l'eau ou de l'air) ;
- la figure 4 est une vue schématique, selon un plan de coupe vertical, du matelas de confort selon la figure 3 ;
- la figure 5 est une vue schématique de dessus d'une variante de réalisation du matelas de confort, mais pas selon l'invention, dont la couche résiliente est constituée par une poche étanche ;
- la figure 6 est une vue schématique, selon un plan de coupe vertical, du matelas de confort selon la figure 5.

Le système de suivi 1 selon l'invention est destiné à équiper une enceinte d'élevage E dans laquelle sont ménagées des stalles de couchage S.

L'enceinte d'élevage E consiste avantageusement en une étable pour l'élevage de bovins, en particulier de bovins laitiers ou de bovins à viande.

Les stalles de couchage S consistent ici en des logettes, ménagées sur au moins une ligne.

Les logettes S constituent un compromis entre un couchage confortable pour le bovin, le respect du mouvement lever/coucher, une station debout confortable et un minimum de souillures dans la logette.

Chaque logette S, classique en soi, est délimitée par :

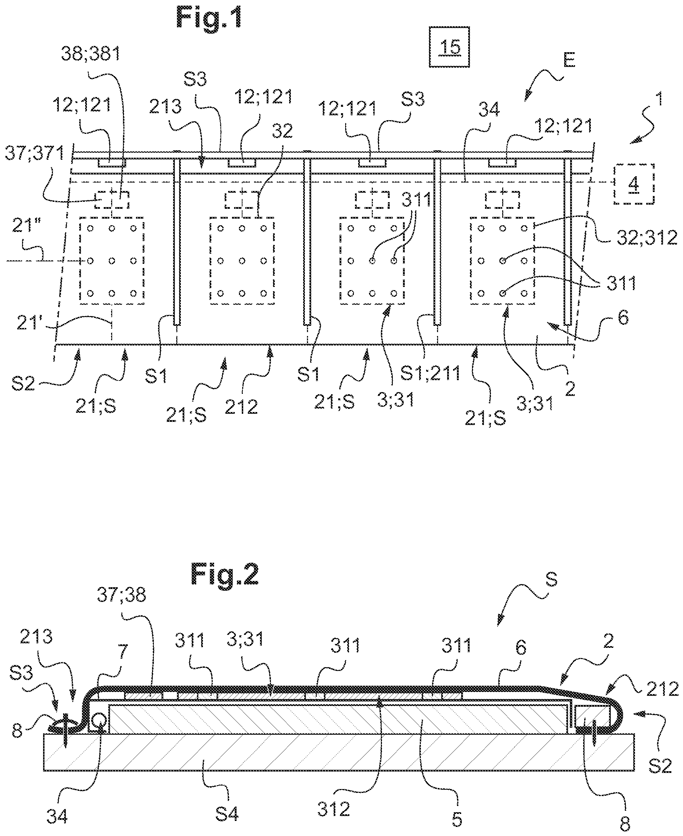

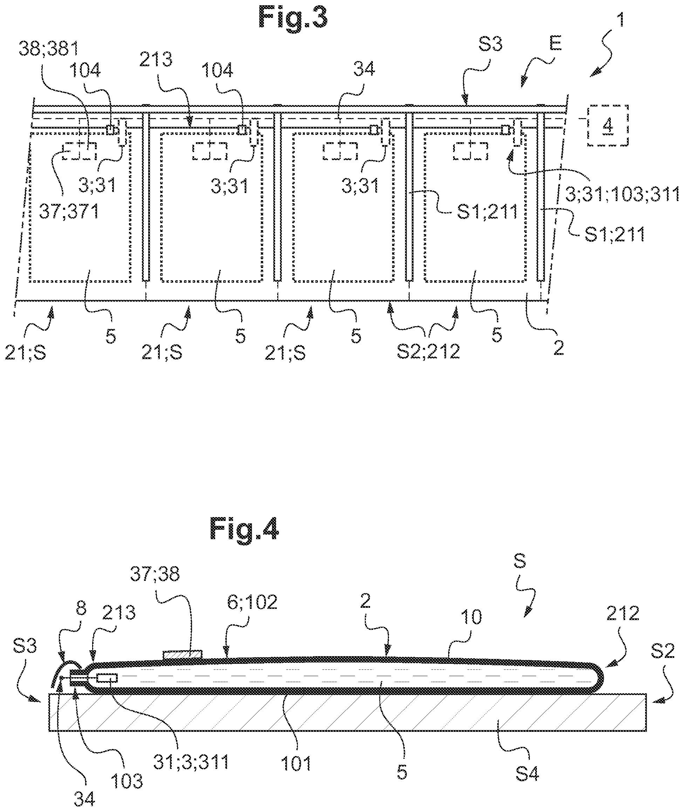

- deux séparations latérales S1 (figures 1 et 3), par exemple des structures tubulaires,
- un seuil arrière de logette S2, s'étendant le long d'un couloir d'accès,
- une limite avant S3, comprenant avantageusement une barre haute au garrot et un arrêtoir inférieur (ou limiteur d'avancement), formant le fond de la logette S, et
- un sol S4, par exemple une dalle de béton (figures 2, 4 et 6).

Le système de suivi 1, équipant cette enceinte d'élevage E, se compose :

- d'au moins un matelas de confort 2, recouvrant le sol S4 de chacune des logettes S et équipé de moyens 3 pour déterminer au moins un paramètre physiologique d'un animal en présence (dits encore « moyens de détermination 3 »), et
- de moyens déportés 4 pour la collecte et/ou le traitement des données issues de ces moyens de détermination 3.

En l'espèce, sur les figures 1 à 4, le matelas de confort 2 s'étend le long de plusieurs logettes S juxtaposées.

Chaque matelas de confort 2 comporte ici plusieurs modules d'accueil 21 juxtaposés, correspondant chacun à la surface au sol d'une logette S, pour accueillir chacun un animal.

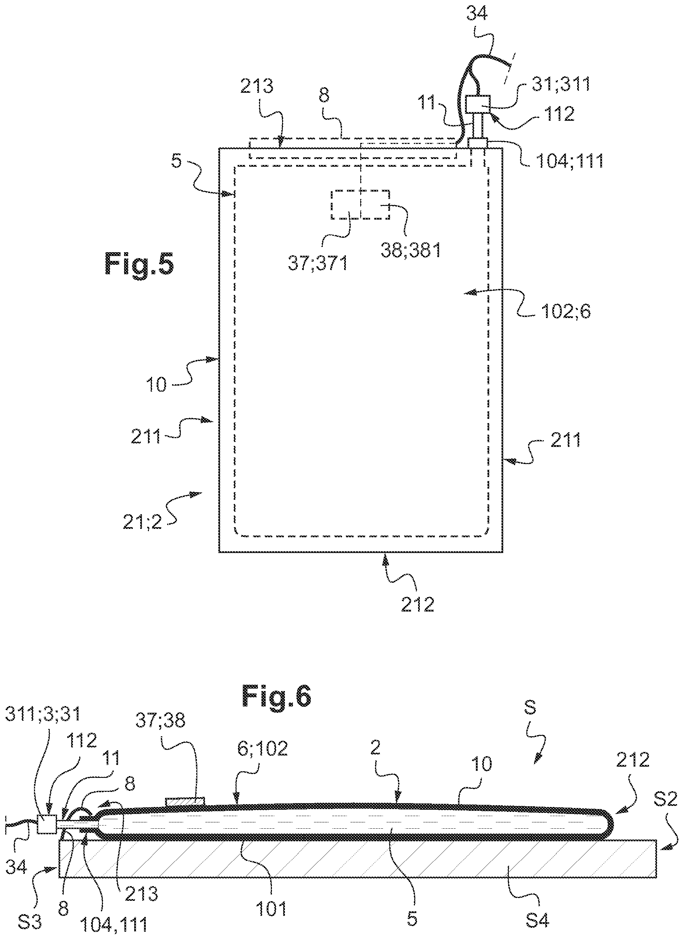

De manière alternative, représentée sur les figures 5 et 6, chaque logette comporte son propre matelas de confort 2 définissant ainsi un unique module d'accueil 21.

Chacun de ces modules d'accueil 21 du matelas de confort 2, de forme générale rectangulaire, est ainsi délimité par :

- deux bordures latérales 211, situées chacune à l'aplomb d'une séparation latérale de logette S1,
- une bordure arrière 212, attenante au seuil arrière de logette S2 (formant une bordure arrière du matelas de confort 2), et
- une bordure avant 213, attenante à la limite avant S3 de la logette S (formant une bordure avant du matelas de confort 2).

Tel que représenté figures 2, 4 et 6, chaque matelas de confort 2 comporte classiquement :

- une couche résiliente 5, apte à subir une déformation élastique, et
- une surface supérieure 6, sus-jacente de la couche résiliente 5, sur laquelle un animal est destiné à prendre appui.

Conformément à la présente invention, les moyens de détermination 3 sont conformés pour déterminer au moins un paramètre physiologique d'un animal en appui sur la surface supérieure 6 du matelas de confort 2.

En l'espèce, ces moyens de détermination 3 équipent chacun des modules d'accueil 21 du matelas de confort 2 de sorte à déterminer au moins un paramètre physiologique d'un animal en appui sur la surface supérieure 6 des modules d'accueil 21 respectifs.

Les moyens de détermination 3 comprennent des moyens 31 pour détecter la présence d'un animal en appui sur la surface supérieure 6 du matelas de confort 2.

En l'espèce, ces moyens de détection 31 équipent chacun des modules d'accueil 21 du matelas de confort 2 de sorte à détecter la présence d'un animal en appui sur la surface supérieure 6 des modules d'accueil 21 respectifs.

Au sein de chaque module d'accueil 21 du matelas de confort 2, les moyens de détection 31 comprennent au moins un capteur de pression 311 qui est raccordé aux moyens déportés 4 de collecte/traitement des données.

Ces capteurs de pression 311 sont choisis parmi des moyens aptes à mesurer le poids du ou des animaux en appui sur la surface supérieure 6 dudit matelas de confort 2.

Par exemple, ces capteurs 311 sont choisis parmi des capteurs aptes à mesurer un différentiel de pression.

En outre, les moyens de détermination 3 comprennent avantageusement des moyens 37, 38 pour l'acquisition de données thermiques et éventuellement vibratoires d'un animal en appui sur la surface supérieure 6 (désignés encore « moyens d'acquisition 37, 38 »).

Les moyens d'acquisition 37, 38, équipant le matelas de confort 2, comprennent :

- des moyens 37 pour la mesure de la température d'un animal en appui sur la surface supérieure 6 du matelas de confort 2 (dits encore « moyens de détermination/mesure de température 37 »), et avantageusement

- des moyens 38 pour la détection de vibrations générées par un animal en appui sur cette surface supérieure 6 du matelas de confort 2 (dits encore « moyens de détermination de vibration 38 »).

En l'espèce, ces moyens de détermination 3 équipent chacun des modules d'accueil 21 du matelas de confort 2 de sorte à détecter la température, et le cas échéant la fréquence cardiaque et/ou respiratoire, d'un animal en appui sur la surface supérieure 6 des modules d'accueil 21 respectifs.

Au sein de chaque module d'accueil 21 du matelas de confort 2, les moyens de détermination 3 comprennent :

- au moins un capteur de température 371, partie des moyens 37 pour la mesure de température, pour détecter la température d'un animal en appui sur la surface supérieure 6, et
- au moins un capteur de vibrations 381, partie des moyens 38 pour la détection de vibrations, pour détecter la fréquence cardiaque et/ou respiratoire d'un animal en appui sur la surface supérieure 6.

Ces capteurs 371, 381 sont avantageusement raccordés également aux moyens déportés 4 de collecte/traitement des données.

Les capteurs de température 371 sont avantageusement choisis parmi des moyens aptes à mesurer la température corporelle d'un animal en position allongée sur la surface supérieure 6 du matelas de confort 2.

Par exemple, ces capteurs de température 371 sont choisis parmi les capteurs de flux thermique.

Un capteur de flux thermique (« heat flux sensor ») consiste avantageusement en un transducteur produisant un signal proportionnel au flux thermique local, par convection et/ou radiation et/ou conduction.

Les capteurs de flux thermiques sont connus également sous différents noms, tels que transducteurs de flux thermique, jauges de flux thermiques ou plaques de flux thermique. Ils sont généralement constitués de thermocouples connectés en série.

Ce flux thermique est mesuré en watts et la densité de flux thermique en watt par mètre carré, en vue d'une conversion en température corporelle de l'animal en présence (exprimée en degré Celsius ou °C).

Ces capteurs de température 371 sont ménagés avantageusement au plus près, voire au niveau, de la surface supérieure 6 du matelas de confort 2.

Les capteurs de vibrations 381 sont avantageusement choisis parmi des moyens aptes à mesurer des vibrations générées par un animal en position allongée sur la surface supérieure 6 du matelas de confort 2.

Par exemple, ces capteurs de vibration 381 sont choisis parmi les capteurs dits de « reconnaissance vibratile ».

Ces capteurs de vibration 381 peuvent également consister en au moins un capteur de pression 381, par exemple des capteurs aptes à mesurer un différentiel de pression.

Les capteurs de vibration 381 sont en particulier adaptés à mesurer la direction, l'amplitude et la durée de chaque vibration émise par le corps de l'animal en présence.

Là encore, ces capteurs de vibrations 381 sont ménagés avantageusement au plus près, voire au niveau, de la surface supérieure 6 du matelas de confort 2.

Les moyens d'acquisition 37, 38 précités vont ainsi détecter la température (par le biais du capteur de température 371) et les vibrations (par le biais du capteur de vibrations 381) d'une zone directement sus-jacente située au niveau de la surface supérieure 6 du module d'accueil 21.

Les moyens de détermination 37, 38 sont avantageusement mis en oeuvre pour obtenir un signal de sortie correspondant à l'intégration/la compilation des signaux provenant des capteurs 371, 381 d'un module d'accueil 21.

De préférence, pour chaque module d'accueil 21, les capteurs 371, 381 sont agencés sur :

- une ligne médiane longitudinale 21', c'est-à-dire à égale distance des bordures latérales 211 du module d'accueil 21, et

- une moitié avant, c'est-à-dire dans une zone délimitée par une ligne médiane transversale 21" et par la bordure avant 213.

Cet agencement permet une collecte optimale de données par l'intermédiaire des moyens d'acquisition 37, 38.

Une première forme de réalisation du matelas de confort 2, équipé de moyens de détermination 3, est représentée sur les figures 1 et 2.

La structure générale de ce matelas de confort 2 est par exemple du genre du matelas LOUISIANE commercialisé par la société BIORET AGRI-LOGETTE CONFORT (NORT SUR ERDRE, FRANCE).

Selon ce premier mode de réalisation, la couche résiliente 5 (figure 2) est constituée par une plaque d'un matériau résilient, par exemple une plaque de granules de caoutchouc (agglomérés ou non agglomérés) ou de latex.

Cette couche résiliente 5 est avantageusement enveloppée dans un film étanche 7, par exemple un film PVC (pour polychlorure de vinyle).

La surface supérieure 6 est ici constituée par un revêtement rapporté sur la couche résiliente 5 enveloppée dans son film étanche 7, par exemple un revêtement en caoutchouc.

Ce revêtement rapporté 6 est avantageusement solidarisé avec le sol S4 par l'intermédiaire de profilés 8 du type baguettes fixés par des pointes ou des clous, notamment le long des bordures arrière 212 et avant 213 du matelas de confort 2 (figure 2).

Au sein de chaque module d'accueil 21 du matelas de confort 2, les moyens de détection 31 comprennent plusieurs capteurs de pression 311 (figure 1) qui sont raccordés aux moyens déportés 4 de collecte/traitement des données.

Ces capteurs de pression 311 sont avantageusement implantés entre la couche résiliente 5 et le revêtement rapporté 6. De manière alternative, non représentée, les capteurs de pression 311 pourraient être implantés entre la couche résiliente 5 et le sol S4.

Chaque capteur de pression 311 va ainsi détecter les variations de pression qui sont générées sur une zone directement sus-jacente et exercées au niveau de la surface supérieure 6 du module d'accueil 21.

A cet effet, les capteurs de pression 311 consistent avantageusement en des capteurs de force traduisant un effort en un signal électrique.

Dans ce cas, des moyens de traitement pourront être mis en oeuvre pour obtenir un signal de sortie correspondant à l'intégration/la compilation des signaux provenant des capteurs de pression 311 d'un module d'accueil 21.

De préférence, pour chaque module d'accueil 21, les capteurs de pression 311 sont répartis dans une zone centrale 32 dont la surface correspond par exemple à 70 % de la surface totale dudit module d'accueil 21.

Cet agencement permet une collecte optimale de données par l'intermédiaire des moyens de détection 31.

En particulier, les capteurs de pression 311 sont agencés de manière homogène au sein de la zone centrale 32 précitée, selon plusieurs lignes parallèles.

Ces capteurs de pression 311 sont par exemple des capteurs de force plats fixés sur une feuille support souple 312, par exemple collés sur une feuille élastomère souple rectangulaire (figure 2).

De leur côté, les moyens d'acquisition 37, 38 sont avantageusement implantés :

- entre la couche résiliente 5 et le revêtement rapporté 6 (figure 2), ou

- dans l'épaisseur du revêtement rapporté 6, ou

- directement sus-jacent du revêtement rapporté 6.

Une seconde forme de réalisation du matelas de confort 2, équipé de moyens de détermination 3, est illustrée par les figures 3 et 4.

La structure générale de ce matelas de confort est par exemple du genre du matelas PACIFIC commercialisé par la société BIORET AGRI-LOGETTE CONFORT (NORT SUR ERDRE, FRANCE).

Selon ce second mode de réalisation, tel que représenté sur la figure 4, le matelas de confort 2 comprend une enveloppe 10 entourant la couche résiliente 5 qui est constituée par une poche étanche remplie avec un fluide.

Le fluide en question est avantageusement choisi parmi l'eau, un gaz (l'air notamment), un gel.

L'enveloppe 10 est avantageusement réalisée en un matériau étanche, par exemple du caoutchouc.

Cette enveloppe 10 comporte deux panneaux, en regard et à distance l'un de l'autre : un panneau inférieur 101 reposant sur le sol S4 et un panneau supérieur 102 constituant directement la surface supérieure 6 du matelas 2.

De préférence, chaque module d'accueil 21 comporte une poche étanche 5 qui lui est propre.

Selon l'invention, l'enveloppe 10 définit une succession de poches étanches 5 juxtaposées qui correspondent chacune à un module d'accueil 21.

Les poches étanches 5 juxtaposées sont par exemple obtenues par vulcanisation dans la masse, sous presse à caoutchouc rotative.

Au sein de chaque module d'accueil 21 du matelas de confort 2, les moyens de détection 31 comprennent un unique capteur de pression 311 qui est implanté au sein de l'une des poches étanches 5 et qui est raccordé aux moyens déportés 4 de collecte/traitement des données.

Ce capteur de pression 311 est ici introduit au travers d'un conduit d'insertion 103 prévu à cet effet, communiquant avec une poche étanche 5.

Ce capteur de pression 311 va ainsi détecter les variations de pression au sein de la poche étanche 5 qui sont générées par la pression globale exercée sur la surface supérieure 6 du module d'accueil 21.

Par exemple, ce capteur de pression 311 consiste en un transmetteur de pression immergeable, traduisant la pression en un signal électrique.

Le montage de ce capteur de pression 311 s'effectue de manière étanche, par exemple par un sertissage d'un câble de sortie 34 au sein du conduit d'insertion 103.

Au sein de chaque module d'accueil 21 du matelas de confort 2, les moyens d'acquisition 37, 38 sont avantageusement implantés au niveau du panneau supérieur 102 et sont raccordé aux moyens déportés 4 de collecte/traitement des données.

En particulier, les moyens d'acquisition 37, 38 sont avantageusement implantés :

- dans l'épaisseur du panneau supérieur 102, ou
- directement sus-jacent de ce panneau supérieur 102 recouvert d'une protection adaptée (figure 4).

Chaque poche étanche 5 est encore munie de moyens d'accès en remplissage 104, par exemple un orifice équipé d'une valve (figure 3).

La fixation de ce matelas de confort 2 à poche étanche, au sein des logettes S, s'effectue au moyen de profilés 8 classiques en soi.

Une troisième forme de réalisation du matelas de confort 2, mais pas selon l'invention, équipé de moyens de détermination 3, est illustrée par les figures 5 et 6.

Ce matelas de confort 2 est similaire à celui décrit ci-dessus en relation avec les figures 3 et 4 en ce qu'il est avantageusement du genre du matelas PACIFIC commercialisé par la société BIORET AGRI-LOGETTE CONFORT (NORT SUR ERDRE, FRANCE).

Là encore, ce matelas de confort 2 comprend une enveloppe 10 entourant la couche résiliente 5 qui est constituée par une poche (ou chambre) destinée à être remplie d'un fluide.

L'enveloppe 10 consiste ainsi en un matériau étanche, notamment au fluide, par exemple du caoutchouc.

Cette enveloppe 10 comporte également deux panneaux, en regard et à distance l'un de l'autre: un panneau inférieur 101 reposant sur le sol S4 et un panneau supérieur 102 constituant directement la surface supérieure 6 du matelas 2.

De préférence, chaque module d'accueil 21 comporte une poche étanche 5 qui lui est propre.

En l'espèce, l'enveloppe 10 contient une unique poche étanche 5. De manière alternative, l'enveloppe 10 peut contenir une succession de poches étanches 5 juxtaposées qui correspondent chacune à un module d'accueil 21.

La poche étanche 5 est associée à des moyens de détection 31 comprenant un unique capteur de pression 311 qui est raccordé aux moyens déportés de collecte/traitement des données.

Le matelas de confort 2 se distingue par rapport au second mode de réalisation précité par le fait que le capteur de pression 311 est déporté par rapport à la poche étanche 5 : il se situe à l'extérieur de cette poche étanche 5, en communication l'un avec l'autre par le biais de moyens de communication fluidique 11.

En l'espèce, les moyens de communication fluidique 11 consistent en un conduit étanche 11, avantageusement une canule ou un tube souple ou rigide, prolongeant la poche étanche 5.

Le conduit étanche 11 se situe à l'extérieur de l'enveloppe 10, en saillie de sa bordure avant 213.

Ce conduit étanche 11 comporte deux extrémités :

- une extrémité amont 111 raccordée de manière étanche (par exemple via un sertissage métallique) avec les moyens d'accès en remplissage 104 de la poche étanche 5, par exemple sous forme d'une pipe de remplissage, et
- une extrémité aval 112 raccordée de manière étanche (par exemple via un filetage) avec le capteur de pression 311.

Du fait de cette structure, le fluide contenu dans la poche étanche 5 remplit également le conduit étanche 11.

Le fluide dans le conduit étanche 11 est ainsi destiné à subir et à reproduire les variations de pression générées au sein de la poche étanche 5.

Le capteur de pression 311 va ainsi détecter les variations de pression au sein de la poche étanche 5 qui sont générées par la pression globale exercée sur la surface supérieure 6 du module d'accueil 21 et qui se reproduisent au sein du conduit étanche 11.

Par exemple, ce capteur de pression 311 consiste également en un transmetteur de pression, traduisant la pression en un signal électrique.

Une telle forme de réalisation est en particulier intéressante sur le plan de la maintenance et de l'assemblage. Il est en effet particulièrement aisé de monter et démonter le capteur de pression 311 sur le matelas de confort, notamment en cas de défaillance.

Au sein de ce matelas de confort 2, là encore, les moyens d'acquisition 37, 38 sont avantageusement implantés au niveau du panneau supérieur 102 et sont raccordé aux moyens déportés 4 de collecte/traitement des données.

En particulier, les moyens d'acquisition 37, 38 sont avantageusement implantés :

- dans l'épaisseur du panneau supérieur 102, ou
- directement sus-jacent de ce panneau supérieur 102 recouvert d'une protection adaptée (figure 6).

La fixation de ce matelas de confort 2 à poche étanche, au sein des logettes S, s'effectue au moyen de profilés 8 classiques en soi.

Des espaces (non représentés) sont ménagés entre deux profilés 8 successifs, voire au sein de ces profilés 8, de sorte à former chacun un passage (ou un logement) adapté à recevoir l'un des conduits étanches 11.

Dans les différents modes de réalisation, les moyens de détermination 3 sont raccordés aux moyens de collecte/traitement 4 par le biais de moyens de communication filaires 34.

Pour limiter le risque de détérioration, ces fils de raccordement 34 sont avantageusement agencés le long de la bordure longitudinale avant 213 du matelas de confort 2.

En particulier, pour le premier mode de réalisation, les fils de raccordement 34 sont ménagés sous le film étanche 7 (figure 2). Pour le second mode de réalisation, les fils de raccordement 34 sont recouverts par un profilé rapporté 8 (figure 4). Pour le troisième mode de réalisation, les fils de raccordement 34 sont recouverts par un profilé rapporté 8 (figures 5 et 6).

De manière alternative, non représentée, les moyens de détermination 3 sont raccordés aux moyens de collecte/traitement 4 par le biais de moyens de communication sans fils, par exemple du type Wi-Fi ou Bluetooth.

En option, tel que représenté sur la figure 1, le système de suivi 1 peut encore comprendre des moyens 12 pour la reconnaissance individualisée de l'animal en appui sur le ou les matelas de confort 2, et le cas échéant sur chacun de leurs modules d'accueil 21.

A cet effet, ces moyens de reconnaissance 12 comprennent par exemple un lecteur fixe 121 apte à lire les boucles électroniques d'identification portées par les animaux (généralement sur une oreille).

Ce lecteur fixe 12 est avantageusement fixé par sanglage au sein de la logette S, ou à défaut sur le béton à l'avant du matelas de confort 2.

Ce lecteur fixe 121 est avantageusement raccordé également avec les moyens déportés 4 de sorte à permettre un traitement individualisé des données issues des moyens de détermination 3.

Les moyens de reconnaissance 12 reposent avantageusement sur une technologie d'identification à distance et sans contact.

La boucle électronique, équipant l'animal, possède un transpondeur coulé dans son matériau constitutif.

Le transpondeur contenu dans la boucle est constitué d'une puce électronique qui contient l'information numérique (le numéro national de l'animal) et d'une antenne qui permet l'échange avec le lecteur 121.

Des standards de puce électronique coexistent, par exemple HDX Half Duplex ou FDX-B Full-Duplex.

Un lecteur 121 « Full-Iso » pourra lire les deux types de puces électroniques.

Le lecteur 121 consiste avantageusement en un module radiofréquence associé à une antenne.

Par ailleurs, les moyens déportés 4 consistent en des moyens électroniques et/ou informatiques pour la collecte et/ou le traitement de données (avantageusement les paramètres physiologiques) issues notamment des moyens de détermination 3.

Les moyens déportés 4 vont ainsi permettre notamment une analyse sociale des animaux de l'élevage et/ou de l'évolution de leur poids, individuellement ou par lot.

Les moyens informatiques comprennent en particulier un ordinateur comprenant un programme d'ordinateur comportant des moyens de code de programme pour la collecte et/ou le traitement de données lorsque ledit programme d'ordinateur est exécuté sur ledit ordinateur.

Les moyens déportés 4 sont connectés à chacun des moyens de détermination 3 présents au sein de l'enceinte E.

Ces moyens déportés 4 reçoivent, convertissent et compilent des signaux en provenance des moyens de détermination 3 de chaque logette S, notamment lorsque des moyens de détection 31 d'une logette S sont soumis à une pression provenant normalement d'un animal présent sur la surface supérieure 6.

En particulier, les moyens de détection 31 de chaque logette S émettent un signal (avantageusement un signal électrique) qui est fonction de la présence et/ou de l'intensité d'une pression exercée sur la surface supérieure 6 du module d'accueil 21 au sein de cette logette S.

Le signal reçu peut alors être utilisé pour permettre :

- une distinction entre l'absence et la présence d'un animal au sein d'une logette S,
- une évaluation de l'intensité de la pression exercée, pour être convertie en poids de l'animal en présence.

Ce signal peut être associé à un animal donné dans le cas d'un système de suivi 1 comprenant des moyens de reconnaissance 12.

En particulier, les moyens déportés 4 comportent l'un au moins des moyens suivants, avantageusement sous forme de moyens de code de programme, tenant compte du signal provenant des moyens de détection 31 :

- des moyens de mesure du poids du ou des animaux en appui sur le ou les matelas de confort, voire des moyens de suivi de la prise de poids dudit ou desdits animaux,
- des moyens d'analyse du temps passé par phase de repos sur le ou les matelas de confort,
- des moyens d'analyse de la fréquence d'utilisation du ou des matelas de confort, le cas échéant des modules d'accueil,
- des moyens d'analyse globale de la fréquentation de l'enceinte d'élevage.

En pratique, de nombreuses informations objectives sur l'élevage peuvent être obtenues par la mise en oeuvre du système de suivi 1 selon l'invention :

1) Pour les bovins laitiers :

- Identification des zones de couchage ;
- Analyse globale de la fréquentation du bâtiment ;
- Analyse du temps passé par phase de repos ;
- Analyse moyennée par lot du temps passé par phase de repos ;
- Tableau croisé des temps de repos par zone du bâtiment et par lot.

2) Pour les bovins à viande :

- Etablissement d'un indice de prise de poids ;
- Moyennisation de l'indice de prise de poids par bâtiment ;
- Identification des zones de couchage ;
- Analyse du temps passé par phase de repos.

Ces analyses peuvent être soit individuelles par animal, si ces derniers sont équipés de puces électroniques, soit par lot ou section ou zone, si les animaux ne sont pas équipés de telles puces électroniques.

De manière générale, un tel système de suivi 1 présente de nombreux avantages pour les utilisateurs.

Pour les bovins laitiers, ce système de suivi 1 permet de détecter et d'analyser l'ambiance du bâtiment par rapport à la zone de fréquentation.

En cas de problème de fréquentation, la zone est identifiée, et la solution à mettre en oeuvre plus adaptée.

Ce système de suivi 1 note également les phases de repos qui sont directement liées à la rumination donc à la production de lait. En cas de changement, type alimentation ou autre, l'impact sur les temps de repos sera connu de l'utilisateur.

Enfin ce système permet de localiser les zones privilégiées de l'animal et ce individuellement en cas d'un équipement complet avec lecteur de puce électronique.

Des temps de repos trop longs, trop courts ou différents de l'habitude peuvent aussi être un symptôme de maladie, de chaleur, etc., et déclenchent donc éventuellement une vigilance accrue sur l'animal.

Pour les bovins à viande, ce système de suivi 1 permet de détecter et d'analyser la prise de poids des animaux et de traduire cette prise de poids sous forme de courbe par animal ou par lot (poids en fonction du temps, par exemple du temps d'engraissement).

Les capteurs identifient également le temps de couchage et les zones de couchage.

L'utilisateur peut donc connaitre et contrôler si la prise de poids est conforme à ses attentes, notamment sur le plan de la quantité et de la rapidité.

De plus ceci lui permet de détecter toute anomalie sur un lot, des lots ou si le changement est global sur l'ensemble du bâtiment.

Les informations sont avantageusement consultables en temps réel et à distance, sur tout support informatique (ordinateur, tablette, téléphone portable).

Le cas échéant, les moyens déportés 4 vont également permettre notamment une évaluation de l'état de stress thermique subi pas les animaux, individuellement ou par lot, voire même une évaluation d'autres modifications physiologiques de l'animal liées à son état de santé et/ou à un stress et/ou à son environnement.

Pour cela, les moyens d'acquisition 37, 38 de chaque logette S émettent un signal (avantageusement un signal analogique ou numérique) qui est fonction de la température, et le cas échéant des vibrations, détectée(s) sur la surface supérieure 6 du module d'accueil 21 au sein de cette logette S.

Le signal reçu peut alors être utilisé pour déterminer/évaluer la température corporelle, et le cas échéant la fréquence respiratoire et/ou cardiaque, d'au moins un animal, de sorte à permettre une évaluation ou une mesure d'un stress (notamment thermique) subi par cet animal présent dans le module d'accueil 21.

Ce signal peut encore être associé à un animal donné dans le cas d'un système de suivi 1 comprenant des moyens de reconnaissance 12 précités.

Ces analyses peuvent être soit individuelles par animal, si ces derniers sont équipés de puces électroniques, soit par lot ou section ou zone, si les animaux ne sont pas équipés de telles puces électroniques.

Pour pallier à un stress thermique, l'enceinte d'élevage E comporte avantageusement des moyens 15 pour réguler les conditions aériennes (notamment en température et en humidité) qui sont représentés schématiquement sur la figure 1.

Ces moyens de régulation aérienne 15 comprennent avantageusement :

- un système de ventilation (ventilation naturelle, ventilation longitudinale, ventilateurs à panier, ventilateurs basse vitesse), et
- un système de projection d'eau (eau pulvérisée ou brumisateurs).

Ces moyens de régulation aérienne 15 sont avantageusement pilotés par le biais d'un programme d'ordinateur équipant les moyens déportés 4 de collecte et/ou de traitement des données (raccordés aux moyens de mesure de température 37, et le cas échéant aux moyens de détection de vibrations 38) de manière à contrôler précisément leurs fonctionnements respectifs.

L'enceinte d'élevage E peut encore comporter des moyens de mesure de la température ambiante et de l'humidité relative de l'air (non représentés).

Ces moyens de mesure sont avantageusement raccordés aux moyens déportés 4 de collecte et/ou de traitement des données, de manière à pouvoir calculer par exemple une valeur de l'index ITH.

En pratique, un tel système de suivi 1 présente de nombreux avantages pour les utilisateurs.

Pour les bovins laitiers, ce système de suivi 1 permet d'évaluer, directement et en continu le risque d'un stress thermique chez les animaux présents dans l'enceinte d'élevage E.

En effet, le système de suivi 1 selon un mode de réalisation selon l'invention permet de détecter directement une augmentation de la température corporelle, voire de la fréquence cardiaque et/ou respiratoire, des animaux présents dans l'enceinte d'élevage E.

De sorte à prévenir un stress thermique potentiel, les moyens de régulation aérienne 15 de l'enceinte d'élevage E peuvent être mis en oeuvre immédiatement, pilotés automatiquement par les moyens déportés 4 de collecte et/ou de traitement des données.

Par exemple, les moyens de régulation aérienne 15 sont mis en oeuvre suite à la détection d'un seuil ajusté à façon de température et/ou de fréquence cardiaque et/ou de fréquence respiratoire.

En configuration active, le système de projection humidifie le pelage de la vache avec des gouttelettes d'eau. Les ventilateurs soufflent de l'air sur le corps de la vache, refroidissant son pelage par évaporation.

Lorsque le risque de stress thermique est écarté, les moyens de régulation aérienne 15 de l'enceinte d'élevage E sont automatiquement arrêtés par les moyens déportés 4 de collecte et/ou de traitement des données.

Par ailleurs, ce système de suivi 1 permet de détecter toute anomalie ou stress sur un animal, un lot, des lots ou si le changement est global sur l'ensemble du bâtiment.

Les informations sont avantageusement consultables en temps réel et à distance, sur tout support informatique (ordinateur, tablette, téléphone portable).

De manière générale, le système de suivi 1 selon un mode de réalisation selon l'invention permet ainsi d'évaluer directement l'état de stress chez des animaux, notamment un stress thermique, avantageusement en complément ou en remplacement d'une mesure indirecte s'appuyant sur l'index ITH.

Il est alors possible d'adapter la ventilation et la brumisation en fonction des besoins, notamment par rapport à un lot ou à une zone de l'enceinte d'élevage.

Un autre avantage est d'alerter l'éleveur en cas de fièvre d'un animal, en particulier en temps réel, symptôme d'une maladie.

Selon une autre variante, le matelas de confort pourrait être équipé uniquement des moyens 38 pour la détection de vibrations, sans les moyens 37 pour mesurer la température.

Une telle forme de réalisation aurait pour intérêt de compléter, compiler et d'individualiser les connaissances sur le rythme cardiaque des animaux, notamment pour déterminer l'influence de toutes les interactions de l'environnement pendant les phases de couchage sur le rythme cardiaque de l'animal.

De manière générale, il convient de noter que le matelas de confort pourrait être équipé - des moyens 37 pour mesurer la température corporelle d'un animal en appui sur ladite surface supérieure et/ou - des moyens 38 pour la détection de vibrations s'exerçant sur la surface supérieure 6, tout en étant dépourvu des moyens de détection 31.

Plus généralement, selon d'autres variantes de réalisation, le matelas de confort pourrait comporter l'un au moins des moyens suivants, pris seul ou en couple :

- lesdits moyens de détection 31, pour la mesure de poids,
- lesdits moyens de mesure de température 37,
- lesdits moyens de détection de vibration 38.

## Revendications

1. Système pour le suivi d'animaux, par exemple pour bovins laitiers ou pour bovins à viande, dans une enceinte d'élevage (E), ledit système comprenant au moins un matelas de confort (2),
   lequel matelas de confort (2) comporte :

   - au moins une couche résiliente (5) apte à subir une déformation élastique, et
   - une surface supérieure (6) sur laquelle un animal est destiné à prendre appui,

lequel matelas de confort (2) est équipé de moyens (3) pour déterminer au moins un paramètre d'au moins un animal en appui sur ladite surface supérieure (6), destinés à être raccordés à des moyens déportés (4) de collecte/traitement des données, lesquels moyens de détermination (3) comprennent des moyens de détection (31) comprenant au moins un capteur de pression (311), pour la mesure du poids dudit au moins un animal en appui sur ladite surface supérieure (6), ledit matelas de confort (2) comportant plusieurs modules d'accueil (21) juxtaposés qui sont chacun aptes à accueillir au moins un animal et qui sont chacun équipés desdits moyens de détermination (3), les moyens de détermination (3) comprenant au moins un capteur de pression (311) qui est positionné au niveau de chacun desdits modules d'accueil (21), ledit système comprenant des moyens déportés (4) de collecte et/ou de traitement des données, raccordés aux moyens de détermination (3) équipant ledit au moins un matelas de confort (2), et les moyens déportés (4) étant connectés à chacun desdits moyens de détermination (3) présents au sein de l'enceinte (E).

2. Système pour le suivi d'animaux, selon la revendication 1, **caractérisé en ce que** la surface supérieure (6) est constituée par un revêtement rapporté sur la couche résiliente (5), et **en ce que** le capteur de pression (311) est implanté entre ladite couche résiliente (5) et ledit revêtement (6).

3. Système pour le suivi d'animaux, selon la revendication 2, **caractérisé en ce que** la couche résiliente (5) est constituée par des granules de caoutchouc agglomérés ou non agglomérés.

4. Système pour le suivi d'animaux, selon la revendication 1, **caractérisé en ce que** la couche résiliente (5) est constituée par au moins une poche étanche destinée à être remplie avec un fluide.

5. Système pour le suivi d'animaux, selon la revendication 4, **caractérisé en ce que** ledit au moins un capteur de pression (311) est implanté :

   - au sein de la poche étanche (5), ou
   - à l'extérieur de la poche étanche (5), raccordés ensemble par le biais de moyens de communication fluidique (11).

6. Système pour le suivi d'animaux, selon l'une quelconque des revendications 1 à 5, **caractérisé en ce que** les moyens de détermination (3) comprennent des moyens (37) pour mesurer la température corporelle dudit au moins un animal en appui sur ladite surface supérieure (6).

7. Système pour le suivi d'animaux, selon l'une quelconque des revendications 1 à 6, **caractérisé en ce que** les moyens de détermination (3) comprennent des moyens (38) pour la détection de vibrations s'exerçant sur la surface supérieure (6), permettant la détection de la fréquence respiratoire et/ou du rythme cardiaque dudit au moins un animal en appui sur ladite surface supérieure (6).

8. Système pour le suivi d'animaux, selon l'une quelconque des revendications 1 à 7, **caractérisé en ce que** les modules d'accueil (21) juxtaposés sont chacun équipés :

   - desdits moyens de détection (31), pour la mesure de poids, et le cas échéant
   - desdits moyens de mesure de température (37), et
   - desdits moyens de détection de vibration (38),

   de sorte à déterminer la température et/ou la fréquence respiratoire et/ou cardiaque, dudit au moins un animal en appui sur la surface supérieure (6) de chacun desdits modules d'accueil (21).

9. Système pour le suivi d'animaux, selon la revendication 8, **caractérisé en ce que** les moyens de détermination (3) comprennent un capteur de température (371) et/ou un capteur de vibration (381) qui est positionné au niveau de chacun des modules d'accueil (21).

10. Système pour le suivi d'animaux, selon l'une quelconque des revendications 1 à 9, **caractérisé en ce que** les moyens de détermination (3) sont raccordés aux moyens de collecte/traitement (4) par le biais de moyens filaires (34) agencés le long d'une bordure avant (213) du matelas de confort (2).

11. Système pour le suivi d'animaux, selon l'une quelconque des revendications 1 à 10, **caractérisé en ce qu'**il comprend des moyens (12) pour la reconnaissance individualisée de l'animal en appui sur le ou les matelas de confort (2), sur chacun de leurs modules d'accueil (21).

12. Enceinte d'élevage équipée d'un système de suivi (1) selon l'une quelconque des revendications 1 à 11.

13. Enceinte d'élevage selon la revendication 12, **caractérisée en ce qu'**elle comprend des logettes (S), et **en ce que** ledit au moins un matelas de confort (2) recouvre le sol (S4) de chacune des logettes (S).

**Patentansprüche**

1. System zur Überwachung von Tieren, zum Beispiel von Milchkühen oder Fleischrindern, in einer Aufzuchtanlage (E), wobei das System wenigstens eine Komfortmatratze (2) aufweist, wobei die Komfortmatratze (2)

> - wenigstens eine federnde Schicht (5), die dazu ausgelegt ist, eine elastische Verformung zu ertragen, und
> - eine obere Oberfläche (6), auf der sich ein Tier abstützen soll, aufweist,

wobei die Komfortmatratze (2) mit Mitteln (3) zum Bestimmen wenigstens eines Parameters wenigstens eines sich auf der oberen Oberfläche (6) abstützenden Tiers ausgestattet ist, die dazu bestimmt sind, mit abgesetzten Mitteln (4) zum Sammeln/Verarbeiten von Daten verbunden zu werden, wobei die Bestimmungsmittel (3) Erfassungsmittel (31) aufweisen, die wenigstens einen Drucksensor (311) zum Messen des Gewichts des sich auf der oberen Oberfläche (6) abstützenden Tiers aufweisen, wobei die Komfortmatratze (2) mehrere nebeneinander liegende Aufnahmemodule (21) aufweist, von denen jedes dazu ausgelegt ist, wenigstens ein Tier aufzunehmen, und von denen jedes mit den Bestimmungsmitteln (3) ausgestattet ist, wobei die Bestimmungsmittel (3) wenigstens einen Drucksensor (311) aufweisen, der im Bereich jedes der Aufnahmemodule (21) angeordnet ist, wobei das System abgesetzte Sammel- und/oder Datenverarbeitungsmittel (4) aufweist, die mit den Bestimmungsmitteln (3), mit denen die wenigstens eine Komfortmatratze (2) ausgestattet ist, verbunden sind, und wobei die abgesetzten Mittel (4) mit jedem der Bestimmungsmittel (3), das in der Aufzuchtanlage (E) vorhanden ist, verbunden sind.

2. System zur Überwachung von Tieren gemäß Anspruch 1, **dadurch gekennzeichnet, daß** die obere Oberfläche (6) aus einer auf die federnde Schicht (5) aufgetragenen Beschichtung besteht und daß der Drucksensor (311) zwischen der federnden Schicht (5) und der Beschichtung (6) eingesetzt ist.

3. System zur Überwachung von Tieren gemäß Anspruch 2, **dadurch gekennzeichnet, daß** die federnde Schicht (5) aus granulierten und nicht granulierten Gummikörnern besteht.

4. System zur Überwachung von Tieren gemäß Anspruch 1, **dadurch gekennzeichnet, daß** die federnde Schicht (5) aus wenigstens einer dichten Tasche besteht, die mit einer Flüssigkeit gefüllt werden soll.

5. System zur Überwachung von Tieren gemäß Anspruch 4, **dadurch gekennzeichnet, daß** der wenigstens eine Drucksensor (311)

> - in der dichten Tasche (5) oder
> - außerhalb der dichten Tasche (5)
eingesetzt ist, wobei alle mittels fluidischer Kommunikationsmittel (11) miteinander verbunden sind.

6. System zur Überwachung von Tieren gemäß einem der Ansprüche 1 bis 5, **dadurch gekennzeichnet, daß** die Bestimmungsmittel (3) Mittel (37) zum Messen der Körpertemperatur des wenigstens einen sich auf der oberen Oberfläche (6) abstützenden Tiers aufweisen.

7. System zur Überwachung von Tieren gemäß einem der Ansprüche 1 bis 6, **dadurch gekennzeichnet, daß** die Bestimmungsmittel (3) Mittel (38) zum Erfassen von sich auf die obere Oberfläche (6) auswirkenden Vibrationen aufweisen, die das Erfassen der Atemfrequenz und/oder des Herzrhythmusses des wenigstens einen sich auf der oberen Oberfläche (6) abstützenden Tiers ermöglichen.

8. System zur Überwachung von Tieren gemäß einem der Ansprüche 1 bis 7, **dadurch gekennzeichnet, daß** die nebeneinander liegenden Aufnahmemodule (21) jeweils mit

> - den Erfassungsmitteln (31) zum Messen des Gewichts und gegebenenfalls
> - den Mitteln (37) zum Messen der Temperatur und
> - den Mitteln (38) zum Erfassen von Vibrationen ausgestattet sind,

um die Temperatur und/oder die Atemfrequenz und/oder die Herzfrequenz des wenigstens einen sich auf der oberen Oberfläche (6) jedes der Aufnahmemodule (21) abstützenden Tiers zu bestimmen.

9. System zur Überwachung von Tieren gemäß Anspruch 8, **dadurch gekennzeichnet, daß** die Bestimmungsmittel (3) einen Temperatursensor (371) und/oder einen Vibrationssensor (381) aufweisen, der im Bereich jedes der Aufnahmemodule (21) angeordnet ist.

10. System zur Überwachung von Tieren gemäß einem der Ansprüche 1 bis 9, **dadurch gekennzeichnet, daß** die Bestimmungsmittel (3) über entlang eines vorderen Rands (213) der Komfortmatratze (2) verlegte Drahtverbindungen (34) mit den Sammel- und/oder Datenverarbeitungsmittel (4) verbunden sind.

**11.** System zur Überwachung von Tieren gemäß einem der Ansprüche 1 bis 10, **dadurch gekennzeichnet, daß** es Mittel (12) zur individualisierten Erkennung des sich auf der oder den Komfortmatratzen (2) auf jedem der Aufnahmemodule (21) abstützenden Tiers aufweist.

**12.** Aufzuchtanlage, die mit einem System zur Überwachung von Tieren gemäß einem der Ansprüche 1 bis 11 ausgestattet ist.

**13.** Aufzuchtanlage gemäß Anspruch 12, **dadurch gekennzeichnet, daß** sie Liegestellen (S) aufweist und daß die wenigstens eine Komfortmatratze (2) den Boden (S4) jeder der Liegestellen (S) bedeckt.

## Claims

**1.** A system for monitoring animals, for example dairy cattle or beef cattle, in a livestock enclosure (E), said system comprising at least one comfort mattress (2), wherein said comfort mattress (2) includes:

- at least one resilient layer (5) adapted to undergo an elastic deformation, and
- an upper surface (6) on which an animal in intended to rest,

wherein said comfort mattress (2) is equipped with means (3) for determining at least one parameter of at least one animal resting on said upper surface (6), intended to be connected to remote data collection / processing means (4),
wherein said determination means (3) comprise detection means (31) comprising at least one pressure sensor (311), for measuring the weight of said at least one animal resting on said upper surface (6),
said comfort mattress (2) including several juxtaposed housing modules (21) that are each adapted to accommodate at least one animal and that are each equipped with said determination means (3), the determination means (3) comprising at least one pressure sensor (311) that is positioned at each of said housing modules (21),
said system comprising remote data collection and / or processing means (4), connected to the determination means (3) equipping said at least one comfort mattress (2),
and the remote means (4) being connected to each of said determination means (3) present within the enclosure (E).

**2.** The system for monitoring animals according to claim 1, **characterized in that** the upper surface (6) consists of a coating added on the resilient layer (5), and **in that** the pressure sensor (311) is implanted between said resilient layer (5) and said coating (6).

**3.** The system for monitoring animals according to claim 2, **characterized in that** the resilient layer (5) consists of agglomerated or non-agglomerated rubber granulates.

**4.** The system for monitoring animals according to claim 1, **characterized in that** the resilient layer (5) consists of at least one sealed bag intended to be filled with a fluid.

**5.** The system for monitoring animals according to claim 4, **characterized in that** said at least one pressure sensor (311) is implanted:

- inside the sealed bag (5), or
- outside the sealed bag (5), both being connected to each other through fluid communication means (11).

**6.** The system for monitoring animals according to any one of claims 1 to 5, **characterized in that** the determination means (3) comprise means (37) for measuring the body temperature of said at least one animal resting on said upper surface (6).

**7.** The system for monitoring animals according to any one of claims 1 to 6, **characterized in that** the determination means (3) comprise means (38) for detecting vibrations exerted on the upper surface (6), allowing the detection of the respiratory rate and/or of the cardiac rhythm of said at least one animal resting on said upper surface (6).

**8.** The system for monitoring animals according to any one of claims 1 to 7, **characterized in that** the juxtaposed housing modules (21) are each equipped with:

- said detection means (31), for measuring weight, and, as the case may be
- said temperature measurement means (37), and
- said vibration detection means (38),

to determine the temperature and/or the respiratory and/or cardiac rate of said at least one animal resting on the upper surface (6) of each of said housing modules (21).

**9.** The system for monitoring animals according to claim 8, **characterized in that** the determination means (3) comprise a temperature sensor (371) and/or a vibration sensor (381) that is positioned at each of the housing modules (21).

**10.** The system for monitoring animals according to any one of claims 1 to 9, **characterized in that** the determination means (3) are connected to the collection / processing means (4) through wired means (34) arranged along a front edge (213) of the comfort mattress (2).

11. The system for monitoring animals according to any one of claims 1 to 10, **characterized in that** it comprises means (12) for the individualized recognition of the animal resting on the comfort mattress(es) (2), on each of their housing modules (21).

12. A livestock enclosure equipped with a monitoring system (1) according to any one of claims 1 to 11.

13. The livestock enclosure according to claim 12, **characterized in that** it comprises stalls (S), and **in that** said at least one comfort mattress (2) covers the ground (S4) of each stall (S).

Fig.1

Fig.2

Fig.3

Fig.4

EP 3 148 323 B1

Fig.5

213    8

5

11    31;311
      112

104;111

37;371    38;381

102;6

10

211    211

21;2

212

Fig.6

311;3;31    37;38    6;102    2    S    212
112    10    S2
11
8
34    213    101    5    S4
S3    104,111
8

17

**EP 3 148 323 B1**

## RÉFÉRENCES CITÉES DANS LA DESCRIPTION

### Documents brevets cités dans la description

*   US 20080173627 A1